# EUROPÄISCHE PATENTSCHRIFT

(11) **EP 3 554 330 B1**
(45) Veröffentlichungstag und Bekanntmachung des Hinweises auf die Patenterteilung: **07.02.2024**
(21) Anmeldenummer: 17817736.6
(22) Anmeldetag: 14.12.2017
(51) Int. Cl.: A47K 13/26

(54) **MUTTER, SCHARNIER, TOILETTENSITZ, VERBINDER, BEFESTIGUNGSSYSTEM UND ANORDNUNG**
NUT, HINGE, TOILET SEAT, CONNECTOR, FASTENING SYSTEM, AND ARRANGEMENT
ÉCROU, CHARNIÈRE, SIÈGE DE TOILETTES, RACCORD, SYSTÈME DE FIXATION ET DISPOSITIF

(30) Priorität: 14.12.2016 DE 102016124344; 05.04.2017 DE 202017102019 U; 05.04.2017 DE 202017102020 U
(43) Veröffentlichungstag der Anmeldung: 23.10.2019
(73) Patentinhaber: Villeroy & Boch AG, 66693 Mettlach (DE)
(72) Erfinder: TRESOLDI, Antonio, 35020 Masera di Padova (IT); KRÄMER, Jörg, 66663 Merzig (DE); ZENNER, Timo, 66663 Merzig (DE)
(74) Vertreter: Meissner Bolte Partnerschaft mbB
(86) Internationale Anmeldenummer: PCT/EP2017/082876
(87) Internationale Veröffentlichungsnummer: WO 2018/109104

(56) Entgegenhaltungen:
- DE-U1-202015 008 989
- DE-U1-202015 008 989
- US-A- 5 711 645
- US-A1- 2013 216 328
- US-A1- 2015 198 198

## Beschreibung

Die Erfindung betrifft ein Befestigungssystem sowie ferner ein Scharnier für einen Toilettensitz und/oder Toilettendeckel und einen Toilettensitz und/oder Toilettendeckel.

Toilettensitze weisen Scharniere auf, die durch ein Befestigungssystem mit einer Toilettenschüssel verbunden werden. Die Scharniere sind an dem Toilettensitz fest beabstandet angeordnet. Der Abstand der an der Toilettenschüssel angebrachten Befestigungssysteme muss daher mit dem Abstand zwischen den Scharnieren übereinstimmen. Dieser Abstand muss bei der Montage des WCs oder bei einem Wechsel des Toilettensitzes genau eingestellt werden. Außerdem soll die Position des Befestigungssystems so anpassbar sein, dass der Toilettensitz bündig mit der Toilettenschüssel abschließt.

Bekannte Befestigungssystem weisen dazu einen Verbinder auf, der auch Käfig genannt wird. Der Verbinder bildet eine Kupplung, die einerseits das Scharnier des Toilettensitzes und andererseits eine Wandaufhängung verbindet, mit der die Toilettenschüssel an der Badwand befestigt wird. Ein Beispiel für einen derartigen Verbinder ist in DE 20 2007 117 328 U1 beschrieben, die ebenfalls auf die Anmelderin zurückgeht. Der bekannte Verbinder weist einen Aufnahmeraum für den Kopf einer Schraube auf, die mit der Wandaufhängung verbunden wird. Der Verbinder nimmt eine Vierkantmutter im Aufnahmeraum auf, die mit dem Scharnier verschraubt wird.

Eine Weiterentwicklung dieses Verbinders ist in der eingangs genannten DE 20 2015 989 U1 beschrieben. Dieser Verbinder ist zweigeteilt und weist einen ersten Aufnahmeraum für den Kopf der mit der Wandaufhängung zu verbindenden Schraube und einen zweiten Aufnahmeraum für eine Mutter auf, die mit dem Scharnier verbunden ist. Dadurch wird die Justierbarkeit des Toilettensitzes verbessert. Die Mutter wird, wie bei der DE 20 2007 117 328 U1, seitlich durch eine entsprechende Öffnung des Verbinders in den Aufnahmeraum eingeführt, was für die Montage nicht optimal ist.

Das Dokument US 5 711 645 A offenbart ein Verbindungsklammer für einen Toilettensitz, mit einer Mutter und einem daran befestigten Betätigungselement. Die Mutter umfasst eine Vielzahl von Halbzylindern, die miteinander verbunden sind und die innere Umfangsflächen aufweisen, die zusammen einen weiblichen Schraubenabschnitt definieren, wodurch die Mutter auf einen Bolzen geschraubt werden kann. Die Mutter umfasst ferner Eingriffselemente, die an einem ihrer Längsenden vorgesehen sind, um die mehreren Halbzylinder miteinander zu verbinden, wobei das gegenüberliegende Längsende einen Verbindungsabschnitt, beispielsweise ein Scharnierelement, aufweist.

Der Erfindung liegt die Aufgabe aufzugrunde, ein Befestigungssystem zum Befestigen eines Toilettensitzes und/oder Toilettendeckels an einer Toilettenschüssel anzugeben, durch die der Toilettensitz und/oder Toilettendeckel einerseits einfach zu montieren ist und andererseits eine ausreichende Bewegungsmöglichkeit zum Justieren des Toilettensitzes und/oder Toilettendeckels ermöglicht wird. Der Erfindung liegt ferner die Aufgabezugrunde, ein Scharnier für einen Toilettensitz und/oder Toilettendeckel sowie einen Toilettensitz und/oder Toilettendeckel, jeweils mit einem derartigen Befestigungssystem anzugeben.

Erfindungsgemäß wird die Aufgabe mit Blick auf das Befestigungssystem, das Scharnier und den Toilettensitz und/oder Toilettendeckel durch die Gegenstände der Ansprüche 1, 6 und 7 gelöst.

Die Erfindung beruht auf dem Gedanken, ein Befestigungssystem mit einer Mutter zum Befestigen eines Toilettensitzes und/oder Toilettendeckels an einer Toilettenschüssel anzugeben. Das Befestigungssystem weist einen zylinderförmigen Verbinder auf, der mit der Toilettenschüssel verbindbar ist und einen Aufnahmeraum für die Mutter bildet. Die Mutter ist in dem Aufnahmeraum einführbar und weist ein Gewinde auf, das mit einem Scharnierelement des Toilettensitzes und/oder Toilettendeckels verbindbar ist. Ein Außenprofil der Mutter ist derart angepasst, dass die Mutter einerseits in einer ersten Montageposition in axialer Richtung entlang der Längsachse des Verbinders in den Aufnahmeraum einführbar und andererseits im Aufnahmeraum in eine zweite Halteposition bewegbar ist. Das Außenprofil der Mutter ist derart angepasst, dass das Außenprofil in der Halteposition ein Innenprofil des Aufnahmeraums zumindest teilweise hintergreift und eine in Längsrichtung des Verbinders wirkende axiale Zugsicherung bildet.

Die Mutter hat den Vorteil, dass diese durch das entsprechend angepasste Außenprofil bei der Montage und im endmontierten Zustand relativ zum Verbinder verschiedene Positionen einnehmen kann. In einer ersten Position, d.h. in der Montageposition kann die Mutter in axialer Richtung entlang der Längsachse des Verbinders in den Aufnahmeraum eingeführt werden. Dadurch kann die Mutter im Unterschied zum Stand der Technik von oben in den Verbinder eingesetzt werden. Die Montagefreundlichkeit des Befestigungssystems wird signifikant verbessert, weil der Verbinder zuerst in der Toilettenschüssel montiert und mit der Wandaufhängung verbunden werden kann.

Danach wird die Mutter von oben in den vormontierten Verbinder eingesetzt und mit dem Scharnier, beispielsweise mit einem Scharnierbolzen verschraubt. Hierfür ist das Außenprofil der Mutter so angepasst, dass diese im Aufnahmeraum des Verbinders in eine zweite Position, d.h. in eine Halteposition bewegt werden kann. Das Außenprofil der Mutter ist weiterhin so angepasst, dass dieses ein Innenprofil des Aufnahmeraums des Verbinders in der Halteposition zumindest teilweise hintergreift. Das Außenprofil bildet eine in Längsrichtung des Verbinders wirkende axiale Zugsicherung.

Die durch das angepasste Außenprofil ermöglichte Positionierbarkeit der Mutter im Verbinder erlaubt einerseits die Montage der Mutter von oben in den Verbinder und andererseits im eingesetzten Zustand der Mutter die axiale Fixierung in eine Richtung, die der Montagerichtung entgegengesetzt ist.

So ist das Außenprofil aus der Montageposition in Umfangsrichtung der Mutter in die Halteposition bewegbar. Die Bewegung in Umfangsrichtung der Mutter erfolgt in Bezug auf den Verbinder. Mit anderen Worten ist das Außenprofil der Mutter so angepasst, dass dieses im Aufnahmeraum des Verbinders um einen bestimmten Winkel drehbar ist, bis die Halteposition erreicht ist. Durch die Drehbewegungen wird die Mutter aus der Montageposition in die Halteposition überführt, so dass das Außenprofil das Innenprofil des Aufnahmeraums des Verbinders zumindest teilweise hintergreift. Das für die Drehbewegung der Mutter erforderliche Moment wird beim Einschrauben des Scharniers aufgebracht. Das Außenprofil der Mutter ist für diese Funktionalität entsprechend angepasst.

Erfindungsgemäß ist das Außenprofil rippenförmig ausgebildet.

Das rippenförmige Außenprofil ist dabei so angepasst, dass dieses in der Montageposition mit dem rippenförmigen Innenprofil des Verbinders so ausgerichtet werden kann, dass die Mutter in Längsrichtung des Verbinders in den Aufnahmeraum eingeführt werden kann. Mit anderen Worten sind das rippenförmige Außenprofil und das rippenförmige Innenprofil in der Montageposition auf Lücke angeordnet. Das rippenförmige Außenprofil ist weiterhin so angepasst, dass dieses im eingeführten Zustand, d.h. im Aufnahmeraum relativ zum Verbinder um einen bestimmten Winkel verdreht werden kann. Dadurch wird das Außenprofil aus der Montageposition (auf Lücke) in die Halteposition verdreht, in der das Außenprofil der Mutter das Innenprofil des Verbinders hintergreift. Mit anderen Worten wird das rippenförmige Außenprofil der Mutter unter das rippenförmige Innenprofil des Verbinders gedreht. Das rippenförmige Innenprofil des Verbinders bildet so einen Anschlag, der die Mutter in axialer Richtung im Verbinder sichert. In dieser Position kann das Scharnier mit einer ausreichend hohen Anzugkraft in den Verbinder eingeschraubt werden.

Die rippenförmige Ausbildung des Außenprofils hat den weiteren Vorteil, dass die Flächenpressung verteilt wird und eine stabile und robuste axiale Zugsicherung der Mutter im Verbinder möglich ist.

Vorzugsweise beträgt die Breite einer Rippe zumindest im maximalen Querschnitt mindestens 2,8 mm. Dadurch wird erreicht, dass die Rippe eine ausreichend große Anlagefläche bildet, die das Innenprofil des Verbinders in der Halteposition hintergreift. Alle Rippen des Außenprofils können mit dieser Maximalbreite ausgeführt sein.

Weiter vorzugsweise kann die Breite eine Rippe zumindest im maximalen Querschnitt mindestens 2,7 mm, mindestens 2,6 mm, mindestens 2,5 mm, mindestens 2,4 mm, mindestens 2,3 mm, mindestens 2,2 mm, mindestens 2,1 mm, mindestens 2,0 mm betragen.

Bei einer weiteren bevorzugten Ausführung bilden die sich in axialer Richtung erstreckenden Seitenflächen einer Rippe einen Winkel von höchstens 16°. Diese Ausführung hat den Vorteil, dass die Rippe gut in den Verbinder einführbar ist und zugleich eine ausreichende Stabilität aufweist.

Gemäß der Erfindung ist vorgesehen, dass ein Außenprofil der Mutter einen Vorsprung als Verdrehsicherung zur Fixierung der Mutter im Aufnahmeraum in Umfangsrichtung des Verbinders aufweist. Der Vorsprung steht in axialer Richtung über eine Unterkante der Mutter vor und ist mit einer entsprechenden Ausnehmung im Boden des Aufnahmeraums in Eingriff bringbar. Die sich in Montagerichtung erstreckende Verdrehsicherung hat den Vorteil, dass die Mutter auf einfache Weise im Verbinder gesichert werden kann.

Die Erfindung betrifft ferner ein Scharnierelement für einen Sitzring einer Toilette und einen Sitzring für eine Toilette. Mit "Toilette" ist eine sanitäre Einrichtung zur Aufnahme von Körperausscheidungen von Menschen gemeint, die meist aus Keramik hergestellt ist und üblicherweise bodenstehend oder wandhängend aufgestellt bzw. befestigt wird. Anstelle eines oder zusätzlich zu einem Sitzring lässt sich mit dem Toilettensitzbefestiger beispielsweise auch ein Deckel schwenkbar an bzw. auf einer Toilette befestigen. Üblicherweise werden Sitzring und Deckel mit zwei Scharnieren an einer Toilette befestigt.

Die Erfindung wird nachstehend anhand von Ausführungsbeispielen mit weiteren Einzelheiten unter Bezug auf die beigefügten schematischen Zeichnungen näher erläutert.

In diesen zeigen
- Fig. 1: eine perspektivische Ansicht einer Mutter nach einem erfindungsgemäßen Ausführungsbeispiel;
- Fig. 2: einen Schnitt durch die Mutter nach Fig. 1 im Bereich der Rippen;
- Fig. 3: einen Schnitt der Mutter nach Fig. 1 im Bereich der Rastfedern;
- Fig. 4: eine schematische Ansicht des rippenförmigen Außenprofils der Mutter nach Fig. 1;
- Fig. 5: eine perspektivische Ansicht eines Verbinders nach einem erfindungsgemäßen Ausführungsbeispiel, an den die Mutter nach Fig. 1 angepasst ist.;
- Fig. 6: einen Schnitt durch den Verbinder nach Fig. 5;
- Fig. 7: eine schematische Ansicht des rippenförmigen Innenprofils des Verbinders nach Fig. 5, an das das rippenförmige Außenprofil der Mutter nach Fig. 1 angepasst ist;
- Fig. 8: eine perspektivische Darstellung einer Kombination aus einem Verbinder, einer Mutter und einer Schraube, wobei der Verbinder und die Mutter nach einem weiteren erfindungsgemäßen Ausführungsbeispiel ausgebildet sind;
- Fig. 9: einen Längsschnitt der Kombination nach Fig. 8;
- Fig. 10: einen Schnitt der Mutter nach Fig. 8;
- Fig. 11: eine perspektivische Darstellung des Verbinders und der Mutter nach Fig. 8 bei der Montage;
- Figur 12: einen Toilettensitzbefestiger gemäß der Erfindung in perspektivischer Darstellung;
- Figur 13: einen Achsschnitt des Toilettensitzbefestigers aus Figur 12;
- Figur 14: einen Achsschnitt einer Mutter des Toilettensitzbefestigers aus Figuren 12 und 13; und
- Figur 15: den Toilettensitzbefestiger aus Figuren 12 und 13 mit einem Scharnier, einem Sitzring und einem Deckel für eine Toilette gemäß der Erfindung.

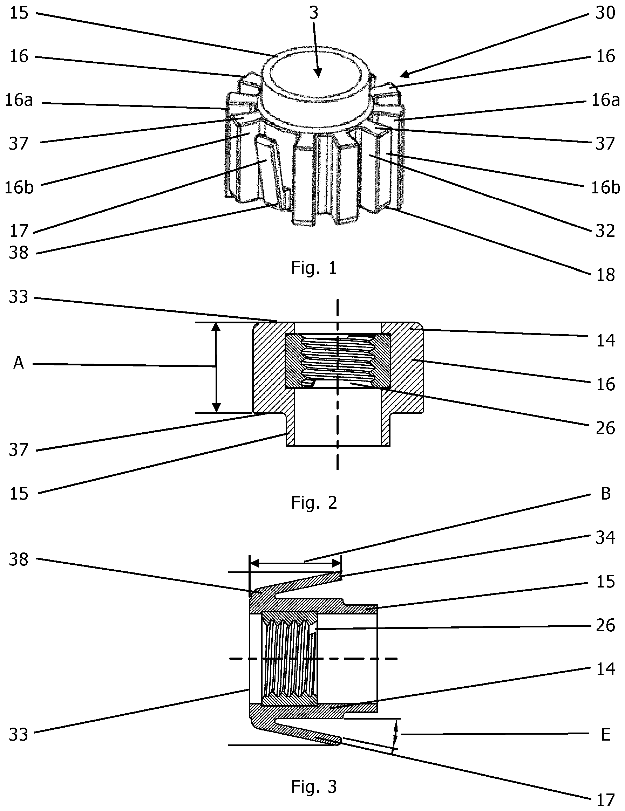

Fig. 1 zeigt eine Mutter nach einem erfindungsgemäßen Ausführungsbeispiel, die zum Befestigen eines Toilettensitzes und/oder Toilettendeckels ausgebildet ist. Es versteht sich, dass die Mutter nur mit einem Toilettensitz oder nur mit einem Toilettendeckel verwendet werden kann. Üblicherweise bilden der Toilettensitz und der Toilettendeckel eine Einheit. Der Toilettensitz und/oder Toilettendeckel werden nachstehend als Toilettensitzeinheit bezeichnet.

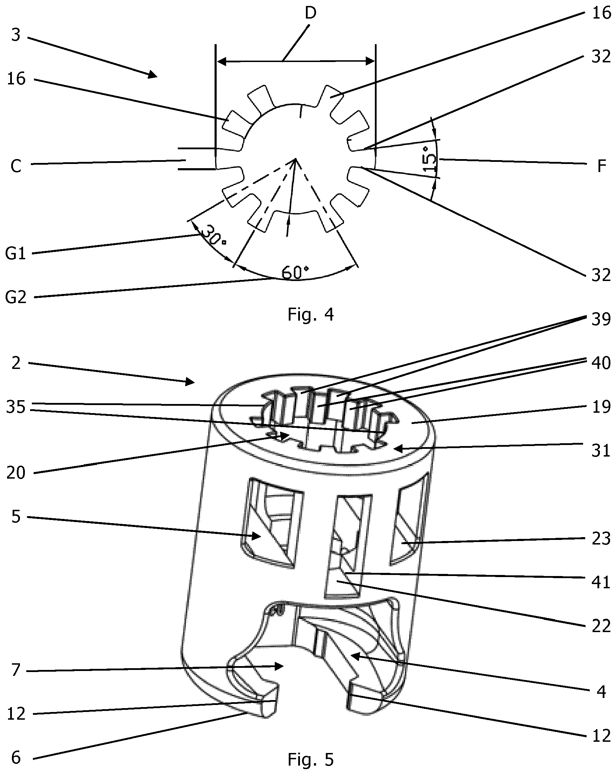

Die Toilettensitzeinheit und die Mutter bilden eine verkehrsfähige Verkaufseinheit, die zusammen im Handel angeboten werden. Dementsprechend werden die Toilettensitzeinheit und die Mutter als Kombination offenbart. Der Verbinder gemäß Fig. 5 wird üblicherweise im Zusammenhang mit einem Wandbefestigungssystem für eine Toilettenschüssel angeboten. Für die Endmontage wird die Mutter und die Toilettensitzeinheit mit dem Verbinder bzw. dem Wandbefestigungssystem zusammengebracht.

Nachstehend bezeichnen dieselben Bezugszeichen gleiche oder ähnliche Bauteile. Orts- und Richtungsangaben wie unten, oben, vertikal oder horizontal sind, wenn nichts anderes explizit angegeben ist, auf den Einbauzustand der Toilettenschüssel bezogen.

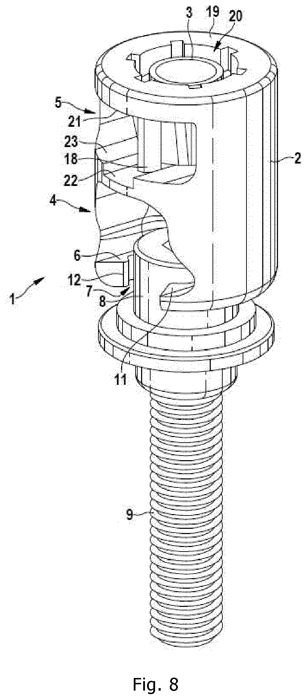

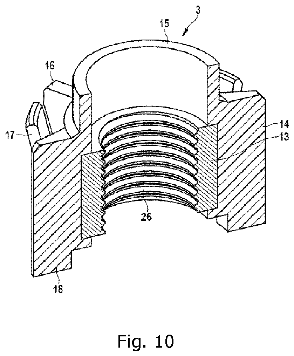

In den Figuren 1 bis 7 ist ein erstes Ausführungsbeispiel der Mutter 3 und des Verbinders 2 dargestellt. Die Figuren 8 bis 11 betreffen ein zweites Ausführungsbeispiel, bei dem sich das Außenprofil 30 der Mutter 3 bzw. das Innenprofil 31 des Verbinders 2 vom ersten Ausführungsbeispiel unterscheiden.

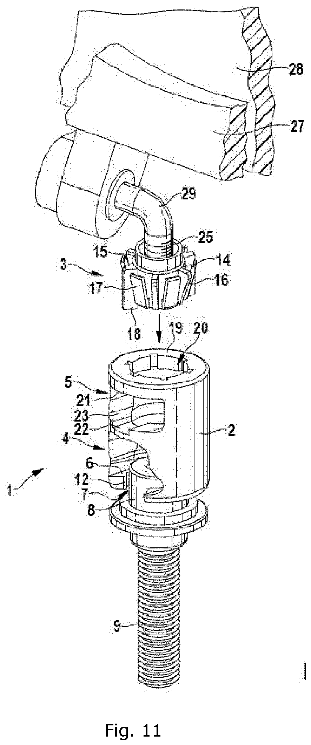

Beide Ausführungsbeispiele beruhen auf demselben Grundprinzip, wonach die Mutter 3 aufgrund des angepassten Außenprofils 30 in den Verbinder 2 von oben eingeführt und im Verbinder 2 begrenzt gedreht werden kann. Die Mutter 3 weist ein Gewinde 26 auf, das in einem Kunststoffkörper 14 angeordnet und gehalten ist. Das Gewinde 26 wird mit dem Scharnier der Toilettensitzeinheit verbunden (siehe Fig. 11). Konkret wird ein Scharnierelement, insbesondere ein Scharnierbolzen in das Gewinde 26 eingeschraubt.

Nachstehend wird der Verbinder 2 näher beschrieben.

Der Verbinder 2 gemäß Fig. 5 weist einen ersten (unteren) Aufnahmeraum 4 für den Kopf 8 einer Befestigungsschraube 9 auf, die beispielsweise in Fig. 8 dargestellt ist. Die Schraube 9 dient dazu, den Verbinder 2 mit einem Gegenstück des Wandbefestigungssystems (nicht dargestellt) zu verbinden. Der Verbinder 2 weist einen zweiten (oberen) Aufnahmeraum 5 auf, in den die Mutter 3 gemäß Fig. 1 bei der Montage eingeführt wird.

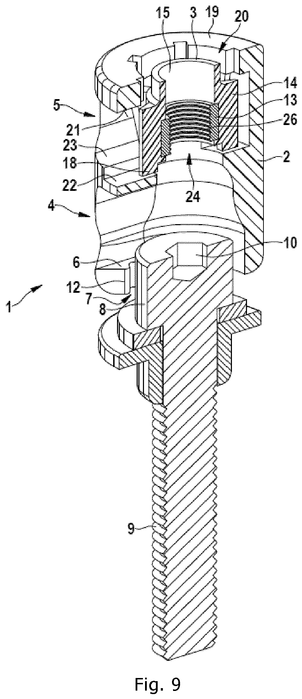

Die beiden Aufnahmeräume 4, 5 und die Einführöffnung 20 sind koaxial in Längsrichtung des Verbinders 2 angeordnet. Die beiden Aufnahmeräume 4, 5 sind durch einen Boden 23, der auch als Zwischenwand bezeichnet werden kann, voneinander getrennt. Dies ist in Fig. 5 sowie bei dem zweiten Ausführungsbeispiel gemäß Fig. 9 gut zu erkennen. Im Boden 23 ist eine Mittelöffnung 24 ausgebildet, die koaxial zur Einführöffnung 20 ausgebildet ist und dazu dient, den Zugang für einen Inbusschlüssel zu schaffen, mit dem die Schraube 9 angezogen werden kann. Diese Anordnung ist in den Figuren 8, 9 dargestellt. Der zweite, obere Aufnahmeraum 5 ist nach außen durch eine Stirnwand 19 begrenzt, die sich parallel zum Boden 23 erstreckt. In der Stirnwand 19 ist die Einführöffnung 20 und das Innenprofil 31 ausgebildet.

Der erste, untere Aufnahmeraum 4 ist bei beiden Ausführungsbeispielen im Wesentlichen identisch ausgebildet. Der Aufnahmeraum 4 wird durch eine untere Stirnwand 6 begrenzt, die sich parallel zum Boden 23 erstreckt und und einen Schlitz 7 zur Aufnahme des Schraubenkopfes 8 aufweist (siehe Fig. 8). Der Schlitz 7 wird durch 2 Schnappnasen 12 begrenzt, die den Kopf 8 im Aufnahmeraum 4 halten.

Das Innenprofil 31 bildet den Innenumfang der Einführöffnung 20. Das Innenprofil 31 umfasst mehrere Montageöffnungen 39, die zwischen Haltevorsprünge 40 ausgebildet sind. Die Haltevorsprünge 40 und die Montageöffnungen 39 sind abwechselnd auf dem Umfang verteilt angeordnet. Die Haltevorsprünge 40 sind rippenförmig ausgebildet. Die Form der Haltevorsprünge 40 entspricht im Wesentlichen der Form der nachstehend näher erläuterten Rippen 16, 16a, 16b der Mutter 3.

Das Innenprofil 31 weist ferner eine Einführkante 35 auf, wobei eine weitere Einführkante 35 diametral gegenüber angeordnet ist. Die beiden Einführkanten 35 sind symmetrisch. Die Einführkanten 35 sind jeweils breiter, als die Haltevorsprünge 40 bzw. die Montageöffnungen 39. Die Einführkanten 35 wirken mit den Rastfedern 17 der Mutter 3 zusammen.

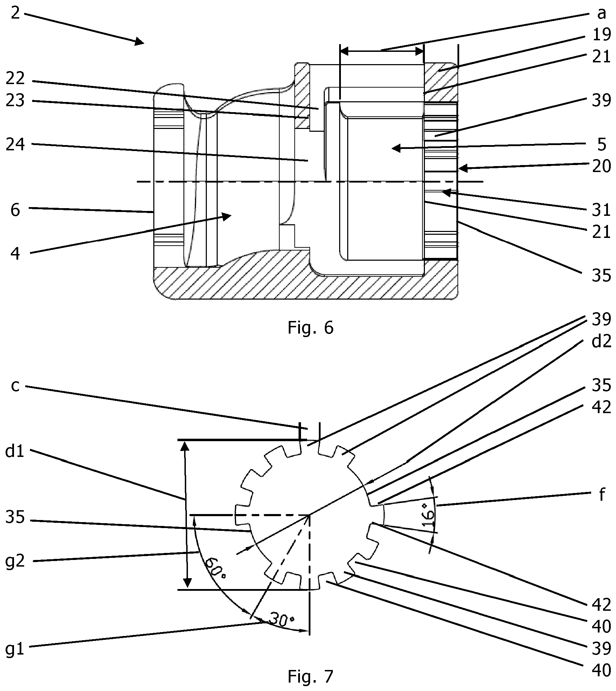

Die Haltevorsprünge 40 und in die Einführkante 35 bilden jeweils Hinterscheidungen 21, wie in Fig. 6 dargestellt. Die Hinterschneidungen 21 werden im Gebrauch vom Außenprofil 30 der Mutter 3 hintergriffen und blockieren so eine axiale Bewegung der Mutter, die dadurch im Aufnahmeraum 5 fest gehalten wird.

Im Boden 23 ist eine Ausnehmung 22 ausgebildet, die sich radial erstreckt. Die Ausnehmung 22 kann auch als Drehsicherungsnut bezeichnet werden. Anschlagfläche 41 begrenzt die Ausnehmung 22 und dient im Gebrauch als Anschlag und somit als Verdrehsicherung für die Mutter 3. Die Breite der Ausnehmung 22, d.h. der Abstand zwischen den gegenüberliegenden Anschlagflächen 41 ist so bemessen, dass eine begrenzte Drehung der Mutter 3 im Aufnahmeraum möglich ist.

Nachstehend wird die Mutter 3 im Detail erläutert.

Das Außenprofil 30 der Mutter 3 erstreckt sich in Umfangsrichtung um die Mutter 3 sowie in axialer und radialer Richtung bezogen auf die Mutter 3. Das Außenprofil 30 der Mutter 3 und das Innenprofil 31 des Verbinders 2 sind aneinander angepasst. Konkret ist das Außenprofil 30 so angepasst, dass die Mutter 3 in axialer Richtung, d.h. entlang der Mittelachse des Verbinders 2 durch die Einführöffnung 20 in den Aufnahmeraum 5 eingeführt werden kann. Die dafür vorgesehene Position der Mutter 3 wird als erste Montageposition bezeichnet. Das Außenprofil 30 ist weiterhin so angepasst, dass die Mutter 3 im Aufnahmeraum 5 in Umfangsrichtung der Mutter 3 gedreht werden kann. Durch die Drehung hintergreift das Außenprofil 30 zumindest teilweise das Innenprofil 31. Diese Position der Mutter 3 wird als zweite Halteposition bezeichnet. In der Halteposition bildet das Außenprofil 30 eine in Längsrichtung des Verbinders 2 wirkende axiale Zugsicherung, durch die die Mutter 3 im Verbinder 2 fest gehalten wird.

Wie in Fig. 1 zu erkennen, weist das Außenprofil 30 mehrere Rippen 16, 16a, 16b auf, die auf dem Umfang der Mutter 3 verteilt angeordnet sind. Die Rippen 16, 16a, 16b stehen radial von der Mutter 3 nach außen ab und erstrecken sich in axialer Richtung, d.h. parallel zur Längsachse der Mutter 3. Die Längsachse der Mutter 3 kann auch als Mittelachse bezeichnet werden. Konkret weist die Mutter 3 zehn Rippen 16, 16a, 16b auf, die symmetrisch auf dem Umfang der Mutter 3 verteilt angeordnet sind.

Das Innenprofil 31 des Verbinders 2 weist eine entsprechende Anzahl von Montageöffnungen 39 (konkret zehn Montageöffnungen 39) auf, die auf dem Umfang der Einführöffnung 20 verteilt angeordnet sind. Die Dimensionen und Positionen der Rippen 16, 16a, 16b sind an die Montageöffnungen 39 angepasst.

Es ist möglich, dass die Mutter 3 weniger als zehn Rippen aufweist. Generell gilt, dass die maximale Anzahl der Rippen 16, 16a, 16b der Mutter 3 der Anzahl der Montageöffnungen 39 des Verbinders 2 entspricht. Die Mutter 3 kann weniger Rippen 16, 16a, 16b als Montageöffnungen 39 des Verbinders 2 aufweisen.

Die oberen Stirnflächen der Rippen 16, 16a, 16b sind als Anschlagflächen 37 ausgebildet, die in der Halteposition am Innenprofil 31 des Verbinders, konkret an der Unterseite der Haltevorsprünge 40 anliegen und eine axiale Bewegung der Mutter 3 blockieren. Die Anschlagflächen 37 sind in ein und derselben Ebene angeordnet, die sich senkrecht zur Längsachse der Mutter 30 erstreckt. Dadurch wird erreicht, dass die Rippen 16, 16a, 16b durch die Drehbewegung unter die Haltevorsprünge 40 des Innenprofils 31 bewegt werden können.

Wie in Fig. 2 dargestellt, sind die unteren Stirnflächen der Rippen 16, 16a, 16b ebenfalls in ein und derselben Ebene angeordnet, die senkrecht zur Mittelachse bzw. Längsachse der Mutter 3 verläuft. Die Unterkante 33 ist in dieser Ebene angeordnet. Die Mutter 3 liegt auf der Unterseite der Rippen 16, 16b im Aufnahmeraum 5 auf.

Die Rippen 16, 16a weisen eine erste Rippe 16a auf, die als Verdrehsicherung ausgebildet ist. Im Unterschied zu den zweiten Rippen 16b, die im Wesentlichen dieselbe Höhe aufweisen, steht die erste Rippe 16a nach unten vor und bildet einen Fortsatz oder Vorsprung 18 (Verdrehsicherung). Der Vorsprung 18 steht in axialer Richtung über die Unterkante 33 der Mutter 3 vor, wie in Fig. 1 zu erkennen. Dasselbe gilt für das zweite Ausführungsbeispiel, wie Fig. 8 dargestellt. Im Aufnahmeraum 5 greift der Vorsprung 18 in die zugehörige Ausnehmung 22 im Boden 23 des Verbinders 2 ein. Die Ausnehmung 22 kann auch als Drehsicherungsnut bezeichnet werden. Der Eingriffszustand ist in den Figuren 8, 9 anhand des zweiten Ausführungsbeispiels dargestellt.

Bei dem ersten Ausführungsbeispiel gemäß Fig. 1 sind zwei erste Rippen 16a als Verdrehsicherung ausgebildet, die diametral gegenüber angeordnet sind. Die Ausnehmung 22 im Boden 23 des Verbinders 2 ist entsprechend ausgebildet und erstreckt sich auf beiden Seiten der Mittelöffnung 24.

Die Mutter 3 weist diametral gegenüber angeordnete Rastfedern 17, insbesondere zwei Rastfedern 17 auf. Die Rastfedern 17 sind an der Unterkante 33 der Mutter 3 mit einem Fuß 38 an der Mutter 3 befestigt und stehen schräg nach oben entgegen der Montagerichtung vor. Das freie Ende 34 der Rastfedern 17 ist radial weiter außen angeordnet als der Fuß 38 und bildet die maximale Radiallage der Rastfeder 17. Die Rastfeder 17 ist in radialer Richtung bewegbar.

Bei der Montage werden die Rastfedern 17 durch die Einführkante 35 an der Einführöffnung 20 des Verbinders 2 radial nach innen gedrückt. Wenn die Mutter 3 die Einführöffnung 20 vollständig passiert hat, schnappen die Rastfedern 17 in die in Fig. 3 dargestellte Ruhelage zurück, sodass sich die freien Enden 34 radial nach außen bewegen. In dieser Halteposition hintergreifen die Rastfedern 17 das Innenprofil 31 und liegen an der Unterseite des Innenprofils 31 im Bereich der Einführkanten 35 an. Die Mutter 3 ist axial gesichert und kann bei der Montage nicht mehr ungewollt aus dem Verbinder 2 rutschen.

Die Anordnung der Rastfedern 17 sowie der zugehörigen Einführkanten 35 hat den weiteren Vorteil, dass die Mutter 3 in einer vorgegebenen Position in die Einführöffnung 20 eingeführt wird. Dies liegt daran, dass die Einführkante 30 breiter ist als die Montageöffnungen 39. Dadurch wird erreicht, dass die beiden ersten Rippen 16a (Verdrehsicherung) korrekt ausgerichtet sind und in die zugehörigen Ausnehmungen 22 im Boden 23 eingreifen. Es versteht sich, dass die Mutter 3 eine einzige erste Rippe 16a als Verdrehsicherung aufweisen kann.

Wie in Fig. 1 dargestellt, weist die Mutter einen Kragen 15 auf, der ringförmig nach oben über die Rippen 16, 16a, 16b vorsteht. Der Kragen ist koaxial zum Gewinde 26 ausgebildet (Fig. 2). Der Außendurchmesser des Kragens 15 ist so bemessen, dass dieser mit Spiel in der Einführöffnung 20, d.h. zwischen den Haltevorsprünge 40 des Verbinders 2 angeordnet werden kann.

Die Rippen 16, 16a, 16b sind wie folgt dimensioniert und positioniert (s. Figuren 2, 3, 4). Bis auf die Höhe sind die Rippen 16, 16a, 16b entsprechend dimensioniert. Die ersten Rippen 16a sind als Verdrehsicherung höher als die zweiten Rippen 16b. Die Rastfedern 17 sind ebenfalls entsprechend dimensioniert.

Die maximale Höhe A einer Rippe 16, konkret einer zweiten Rippe 16b (ohne Verdrehsicherung) beträgt A = ca. 11 mm, insbesondere A = 10,9 mm. Die Höhe A einer Rippe 16, 16b kann kleiner sein, bspw. 10,8 mm, 10,7 mm usw..

Der maximale Abstand B zwischen dem freien Ende 34 der Rastfeder 17 und einer imaginären Verlängerung der Unterkante 33 beträgt B = ca. 11 mm, insbesondere B = 10,9 mm. Höhe B einer Rippe 16, 16b kann kleiner sein, bspw. 10,8 mm, 10,7 mm usw..

Die maximale Breite C einer Rippe 16, 16a, 16b beträgt C = ca. 2,8 mm. Die maximale Breite liegt an der Außenkante der Rippe 16 vor. Wie vorstehend beschrieben kann die maximale Breite C kleiner als 2,8 mm sein.

Der maximale Außendurchmesser D des Außenprofils 30, d.h. der Abstand zwischen den Außenkanten zweier diametral gegenüber angeordneter Rippen 16 beträgt D = ca. 20,5 mm. Kleinere Abstände sind möglich. Die Untergrenze des Abstandes D beträgt D = ca. 20,7 mm.

Der Öffnungswinkel E der Rastfedern 17 in der Ruhelage beträgt E = ca. 12°
Der Winkel zwischen zwei unmittelbar angrenzender Rippen 16, 16a, 16b beträgt G1 = ca. 30°. Im Bereich der Rastfedern 17 beträgt der Winkel G2 zwischen zwei Rippen 16 G2 = ca. 60°. Mit anderen Worten ersetzt eine Rastfeder 17 eine Rippe 16.

Die Rippen 16, 16a, 16b verbreitern sich mit zunehmendem Abstand von der Mittelachse der Mutter 3. Der Winkel F zwischen den Seitenflächen 32 einer Rippe 16 beträgt maximal F = ca. 16°. Konkret beträgt der Winkel F = 15°. Kleinere Winkel F sind möglich.

Wie Fig. 7 zu entnehmen, korreliert das Außenprofil 30 der Mutter 3 mit dem Innenprofil 31 des Verbinders 2.

So entspricht die Anzahl der Rippen 16, 16a, 16b der Mutter 3 der Anzahl der Montageöffnungen 39 bzw. der Haltevorsprünge 40 des Verbinders 2. Die Winkel g1, g2 zwischen angrenzenden Montageöffnungen 39 entsprechen den Winkeln G1, G2 zwischen angrenzenden Rippen 16, 16a, 16b. Die Winkel g1, g2 betragen g1 = 30° und g2 = 60° wobei der Winkel g2 Montageöffnungen 39 betrifft, zwischen denen die Einführkante 30 ausgebildet ist. Der Winkel f zwischen den Seitenflächen 42 einer Montageöffnung 40 beträgt f = ca. 16°. Der Abstand c zwischen den Seitenflächen 42 einer Montageöffnung 40 beträgt c = ca. 2,8 mm. Der größere Innendurchmesser d1 zwischen zwei diametral gegenüber angeordneten Montageöffnungen 39 beträgt die d1 = ca. 20,7 mm. Der kleinere Innendurchmesser d2 des Innenprofils 31 beispielsweise zwischen den Einführkanten 35 oder zwischen zwei diametral gegenüber angeordneten Haltevorsprünge 40 beträgt d2 = ca. 17 mm. Wie in Fig. 6 gezeigt, beträgt die Höhe a des Aufnahmeraums 5, konkret der Abstand zwischen dem Boden 23 neben der Ausnehmung 22 und der Unterseite der Haltevorsprünge bzw. allgemein der Hinterschneidung 21 a = ca. 11 mm.

Das zweite Ausführungsbeispiel im 8 bis 11 unterscheidet sich vom ersten Ausführungsbeispiel gemäß Figuren 1 bis 7 einerseits dadurch, dass das Außenprofil 30 der Mutter 3 Rippen und Rastfedern aufweist, die auf dem Umfang der Mutter 3 abwechselnd angeordnet sind. Das Innenprofil 31 der Einführöffnung 20 des Verbinders 2 ist entsprechend ausgebildet und weist mehrere Einführkanten und Montageöffnungen abwechselnd verteilt auf dem Umfang auf. Das Grundprinzip, wonach die Mutter 3 von oben in den Aufnahmeraum 5 des Verbinders 2 eingeführt werden kann (erste Montageposition) entspricht dem Grundprinzip der Mutter gemäß Fig. 1. Dasselbe gilt für die Bewegung der Mutter 3 im Aufnahmeraum 5, die durch eine Drehung in die Halteposition überführt werden kann. Dies ist bei dem Ausführungsbeispiel gemäß Figuren 8 bis 11 entsprechend möglich.

Ein weiterer Unterschied besteht darin, dass die Wandung des Aufnahmeraums 5 im Bereich der Ausnehmung 22 bei dem zweiten Ausführungsbeispiel weiter als bei dem ersten Ausführungsbeispiel ausgeschnitten ist. Im Übrigen stimmen die beiden Ausführungsbeispiele überein.

Die Montage ist anhand der Darstellung gemäß Fig. 11 verdeutlicht, wobei in der Praxis die Mutter 3 zumeist mit einem Scharnierbolzen verschraubt ist, der wiederum mit dem Scharniergelenk der Toilettensitzeinheit verbunden ist, beispielsweise durch einen Rastverschluss. Das Prinzip ist dasselbe.

Der Verbinder 2 mit der Schraube 9 im unteren Aufnahmeraum 4 wird mit einem nicht dargestellten Wandbefestigungssystem verschraubt, wobei die Schraube 9 von oben mit einem Sechskantschlüssel durch die Einführöffnung 20 und die Mittelöffnung 24 eingeschraubt wird. Damit ist der Verbinder 2 in der Toilettenschüssel montiert.

Daraufhin wird von oben, wie in Fig. 11 dargestellt, die Mutter 3 mit dem Scharnier bzw. Scharnierelement 29 in der Montageposition in den Verbinder 2 eingeführt, wie durch den Richtungspfeil dargestellt. In der Montageposition sind das Außenprofil 30 der Mutter und das Innenprofil 31 der Einführöffnung 20 bzw. des Verbinders 2 so ausgerichtet, dass die Mutter 3 durch die Einführöffnung 20 passt. Konkret fluchten die Rippen 16, 16a, 16b mit den Montageöffnungen 39, so dass die Rippen 16, 16a, 16b durch die jeweilige Montageöffnungen 39 hindurch bewegt werden können. Falls die Mutter 3, wie in beiden Ausführungsbeispiele gezeigt, mit Rastfedern 17 ausgestattet sind, sind diese ebenfalls mit dem zugehörigen Innenprofil 31 ausgerichtet, konkret mit den Einführkanten 35. Beim ersten Ausführungsbeispiel hat dies den Vorteil, dass die erste Rippe 16a mit der Verdrehsicherung korrekt positioniert ist.

Im Aufnahmeraum 5 greift der Vorsprung 18 der ersten Rippe 16a in die Ausnehmung 22 im Boden 23 des oberen Aufnahmeraums. Die übrigen zweiten Rippen 16b liegen auf dem Boden 23 neben der Ausnehmung 22 auf. Die Anschlagfläche 37 der Rippen 16, 16a, 16b ist geringfügig tiefer angeordnet, als die Unterseite bzw. Hinterschneidung 21 des Innenprofils 31.

Die Mutter 3 bzw. das Gewinde 26 der Mutter 3 wird dann mit dem Scharnierelement 23, insbesondere dem Scharnierbolzen verbunden. Es ist auch möglich, wie in Fig. 11 dargestellt, zuerst die Mutter 3 mit dem Scharnierbolzen bzw. Scharnierelement 29 zu verbinden und dann die Mutter 3 in den Verbinder 2 einzustecken.

Durch das über den Scharnierbolzen eingeleitete Drehmoment wird die Mutter 3 in Umfangsrichtung im Aufnahmeraum gedreht und zwar so weit, bis der Vorsprung 18 an einer der Anschlagflächen 41 der Ausnehmung 22 anschlägt. Dadurch werden zwei Wirkungen erreicht. Einerseits werden die Rippen 16, 16a, 16b durch die Drehbewegung der Mutter 3 unter die Haltevorsprünge 40 der Stirnwand 19 bewegt. Damit ist die Mutter 3 im Aufnahmeraum 5 axial gesichert. Die Drehbewegung der Mutter 3 wird dann durch die Anschlagfläche 41 blockiert, sodass der Scharnierbolzen weiter in die Mutter 3 eingeschraubt und diese mit dem Verbinder verspannt wird. Dabei kann die Toilettensitzeinheit justiert werden, bevor der Scharnierbolzen fest angezogen wird.

Auf diese Weise wird das Scharnier der Toilettensitzeinheit perfekt mit der Schüssel verbunden, wobei die Montage einfach und schnell erfolgt.

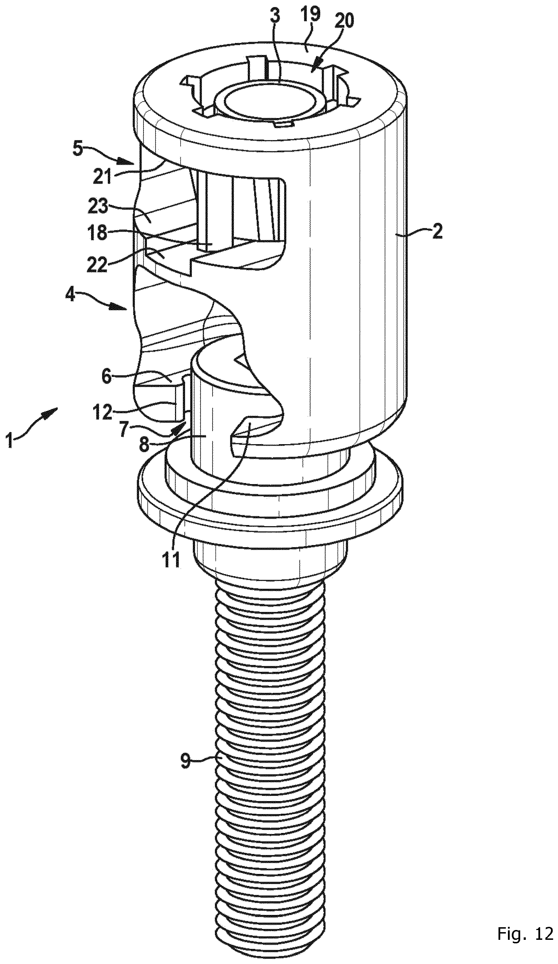

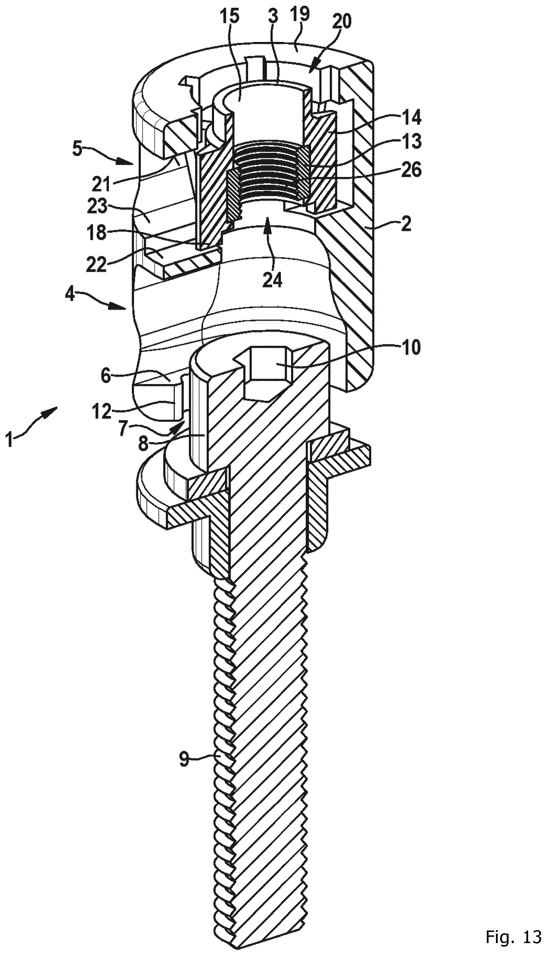

Der in Figuren 12 und 13 gezeigte Toilettensitzbefestiger 1 dient einer Befestigung eines Sitzrings und/oder eines Deckels auf einer nicht gezeichneten Toilette. Der Toilettensitzbefestiger 1 weist einen Verbinder 2 und eine Mutter 3 auf. Im Ausführungsbeispiel ist der Verbinder 2 ein zylinderförmiges Kunststoffteil mit zwei seitlich und an Stirnseiten des Verbinders 2 offenen Höhlungen 4, 5. An einem Stirnende, das nachfolgend als unteres Stirnende bezeichnet wird, weist der Verbinder 2 eine nach innen stehende Stirnwand 6 mit einem Schlitz 7 auf, der auf der Seite offen ist, an der auch die zugeordnete Höhlung 4 offen ist, welche nachfolgend als untere Höhlung 4 bezeichnet wird. Radial von einer Seite ist ein spezieller Schraubenkopf 8 einer Schraube 9 in den Schlitz 7 einbringbar. Mit "spezieller Schraubenkopf" ist gemeint, dass der Schraubenkopf 8 zylinderförmig ist und einen Innensechskant 10 in einer Stirnseite als Werkzeugsitz zu einem Drehen der Schraube 9 mit einem nicht gezeichneten Inbusschlüssel und zwei Parallelnuten 11 am Umfang aufweist. Die Parallelnuten 11 sind einander gegenüber angeordnet und weisen zueinander parallele Nutgründe auf. Die Stirnwand 6 des Verbinders 2 greift in die Parallelnuten 11 des Schraubenkopfs 8 ein, so dass die Schraube 9 gleichachsig, dreh- und axialfest mit dem Verbinder 2 verbunden ist. Der Schraubenkopf 8 mit den Parallelnuten 11 und die Stirnwand 6 des Verbinders 2 mit dem Schlitz 7 können auch als Einrichtung zum Verbinden der Schraube 9 mit dem Verbinder 2 aufgefasst werden. An einer Öffnung des Schlitzes 7 weist die Stirnwand 6 des Verbinders 2 nach innen stehende Schnappnasen 12 auf, die den Schraubenkopf 8 im Schlitz 7 halten. Mit der Schraube 9 lässt sich der Verbinder 2 an der nicht gezeichneten Toilette befestigen.

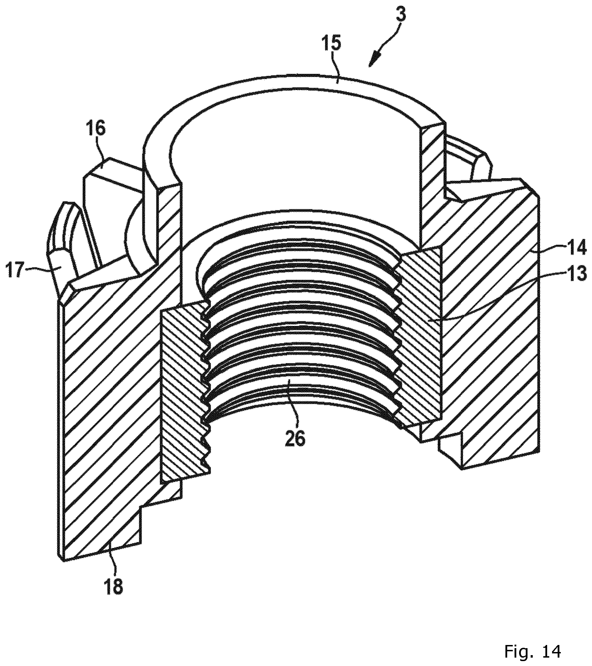

Die in Figur 14 in einem Achsschnitt als Einzelteil gezeichnete Mutter 3 weist eine herkömmliche Sechskantmutter 13 aus Metall auf, die mit einem Kunststoffkörper 14 umspritzt ist. Der Kunststoffkörper 14 ist Teil der Mutter 3 und weist einen zur Sechskantmutter 13 koaxialen, rohrförmigen, axial kurzen Kragen 15 und sternförmig nach außen stehende Rippen 16 auf. Außerdem stehen Federzungen, die nachfolgend als Rastelemente 17 bezeichnet werden, in einem spitzen Winkel zu einer Achse der Mutter 3 schräg in Richtung des Kragens 15 nach außen von der Mutter 3 ab. Auf einer dem Kragen 15 gegenüberliegenden Stirnseite der Mutter 3 gehen die Federzungen einstückig in den Kunststoffkörper 14 der Mutter 3 über. Durch eine 5 Elastizität des Kunststoffs federn in Richtung des Krages 15 schräg nach außen weisende, freie Enden der die Rastelemente 17 bildenden Federzungen in radialer Richtung der Mutter 3. An der dem Kragen 15 gegenüberliegenden Stirnseite weist der Kunststoffkörper 14 der Mutter 3 zwei Drehsicherungsnasen 18 in einer Axialebene der Mutter 3 auf.

An einem der Stirnwand 6 mit dem Schlitz 7 gegenüberliegenden Stirnende, das hier als oberes Stirnende bezeichnet wird, weist der Verbinder 2 eine lochscheibenförmige Stirnwand 19 mit einem Mittelloch auf, das ein zu den Rippen 16 der Mutter 3 komplementäres Vielnutprofil aufweist. Das Mittelloch der Stirnwand 19 am oberen Stirnende des Verbinders 2 wird nachfolgend als Öffnung 20 der angrenzenden Höhlung 5 des Verbinders 2 bezeichnet werden, wobei diese Höhlung 5 nachfolgend als obere Höhlung 5 bezeichnet werden wird. Die Öffnung 20 der oberen Höhlung 5 korrespondiert geometrisch mit der Mutter 3. Durch die Öffnung 20 kann die Mutter 3 axial zur Schraube 9 in die obere Höhlung 5 des Verbinders 2 eingebracht werden, wobei die Rastelemente 17 an einer der oberen Höhlung 5 zugewandten Unterseite der Stirnwand 19 einrasten, so dass die Mutter 3 axialfest in der Höhlung 5 gehalten ist. Die Unterseite der Stirnwand 19 bildet eine Hinterschneidung 21, welche die Rastelemente 17 hintergreifen. Der Verbinder 2 des Toilettensitzbefestigers 1 verbindet die Mutter 3 gleichachsig und axialfest mit der Schraube 9. "Axialfest" bedeutet eine zug- und druckfeste Verbindung der Mutter 3 mit der Schraube 9. Die Rastelemente 17 und die Stirnwand 19, die die Rasteelemente 17 hintergreifen, bilden eine Rasteinrichtung 17, 19, die beim Einbringen der Mutter 3 in die obere Höhlung 5 des Verbinders 2 einrastet und die Mutter 3 in der oberen Höhlung 5 hält.

Durch die seitliche Öffnung der oberen Höhlung 5 könnte eine anders geformte Mutter auch seitlich in die obere Höhlung 5 eingebracht werden (nicht dargestellt). In einer alternativen Ausführungsform (nicht dargestellt) weist die obere Höhlung 5 keine seitliche Öffnung auf, oder die seitliche Öffnung ist so klein, dass keine Mutter seitlich einbringbar ist.

Durch die Öffnung 20 am oberen Stirnende des Verbinders 2 und ein Mittelloch 24 in einer Zwischenwand 23 zwischen den beiden Höhlungen 4, 5 des Verbinders 2 lässt sich ein nicht dargestellter Inbusschlüssel zu einem Drehen und Festziehen der Schraube 9 am Innensechskant 10 ihres Schraubenkopfs 3 ansetzen.

Die Rippen 16 sind so an der Mutter 3 angeordnet und geformt, dass sich die Mutter 3 nur in einer bestimmten und in einer dazu um 180° gedrehten Winkelstellung durch das komplementäre Vielnutprofil der Öffnung 20 in die obere Höhlung 5 des Verbinders 2 einbringen lässt. In dieser Winkelstellung befinden sich die beiden Drehsicherungsnasen 18 in derselben Axialebene wie eine Drehsicherungsnut 22 in der Zwischenwand 23 zwischen den beiden Höhlungen 4, 5 des Verbinders 2. Dadurch gelangen die Drehsicherungsnasen 18 beim Einbringen der Mutter 3 durch die Öffnung 20 in der Stirnwand 19 im oberen Stirnende des Verbinders 2 in die obere Höhlung 5 in die Drehsicherungsnut 22 in der Zwischenwand 23, so dass die Mutter 3 durch Formschluss drehfest in der oberen Höhlung 5 des Verbinders 2 aufgenommen ist. Andere Drehsicherungen der Mutter 3 in der oberen Höhlung 5 des Verbinders 2 sind nicht ausgeschlossen. Der Verbinder 2 verbindet die Mutter 3 drehfest mit der Schraube 9.

Der Kragen 15 der Mutter 3 ragt in die Öffnung 20 der Stirnwand 19, wenn die Mutter 3 in die obere Höhlung 5 des Verbinders 2 eingebracht ist. Dabei weist der Kragen 15 Spiel in der Öffnung 20 auf, so dass die Mutter 3 radial beweglich in der oberen Höhlung des Verbinders 2 aufgenommen ist. Dadurch lässt sich ein Sitzring und/oder Deckel, der mit dem Verbinder 2 an einer Toilette befestigt wird, an der Toilette ausrichten.

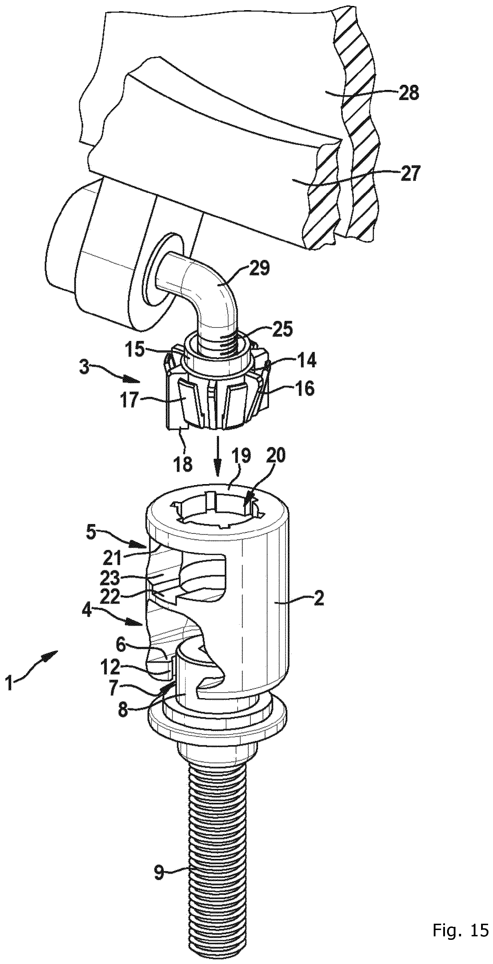

In Figur 15 ist ein rechtwinklig abgewinkelter Bolzen mit einem Gewinde 25 an einem Schenkel in ein Mutterngewinde 26 der Mutter 3 geschraubt. Auf einem anderen Schenkel des abgewinkelten Bolzens sind ein Sitzring 27 und ein Deckel 28 schwenkbar gelagert. Der abgewinkelte Bolzen bildet ein Scharnier oder Scharnierelement 29 für den Sitzring 27 und den Deckel 28, über das der Sitzring 27 und der Deckel 28 mittels der Mutter 3 am Verbinder 2 des Toilettensitzbefestigers 1 und über den Verbinder 2 und die Schraube 9 an der nicht gezeichneten Toilette befestigbar sind. Die Befestigung des Scharnierelements 29 mit dem Sitzring 27 und dem Deckel 28 erfolgt durch Einbringen und Einrasten der Mutter 3, in die das Scharnierelement 29 geschraubt ist, durch die Öffnung 20 in die obere Höhlung 5 des Verbinders 2. Grundsätzlich lässt sich die Mutter 3 auch ohne das Scharnierelement 29 durch die Öffnung 20 in die obere Höhlung 5 des Verbinders 2 einbringen und einrasten.

### Bezugszeichenliste

- 1: Befestigungssystem
- 2: Verbinder
- 3: Mutter
- 4: Aufnahmeraum für den Schraubenkopf
- 5: Aufnahmeraum für die Mutter
- 6: Stirnwand (Aufnahmeraum für den Schraubenkopf)
- 7: Schlitz
- 8: Schraubenkopf
- 9: Schraube
- 10: Innensechskant
- 11: Parallelnut
- 12: Schnappnase
- 13: Sechskantmutter
- 14: Kunststoffkörper
- 15: Kragen
- 16: Rippe
- 16a: erste Rippe (Verdrehsicherung)
- 16b: zweite Rippe (Zugsicherung)
- 17: Rastfeder
- 18: Vorsprung (Drehsicherungsnase)
- 19: Stirnwand (Aufnahmeraum für die Mutter)
- 20: Einführöffnung
- 21: Hinterschneidung
- 22: Ausnehmung (Drehsicherungsnut)
- 23: Boden (Zwischenwand)
- 24: Mittelöffnung
- 25: Gewinde
- 26: Mutterngewinde
- 27: Sitzring
- 28: Deckel
- 29: Scharnierelement
- 30: Außenprofil
- 31: Innenprofil
- 32: Seitenflächen (Rippen)
- 33: Unterkante
- 34: freies Ende
- 35: Einführkante
- 36: frei
- 37: Anschlagfläche der Rippe (Zugsicherung)
- 38: Fuß
- 39: Montageöffnungen
- 40: Haltevorsprünge
- 41: Anschlagfläche der Ausnehmung (Verdrehsicherung)
- 42: Seitenflächen (Montageöffnungen)

### Mutter

- A: maximale Höhe einer Rippe
- B: maximaler Abstand
- C: maximale Breite einer Rippe
- D: maximaler Durchmesser des Außenprofils
- E: Winkel der Rastfeder in der Ruhelage
- F: Winkel der Seitenflächen einer Rippe
- G1: Winkel zwischen angrenzenden Rippen
- G2: Winkel zwischen angrenzenden Rippen

### Verbinder

- a: Innenhöhe des Aufnahmeraums der Mutter
- b: frei
- c: Breite einer Montageöffnung
- d1: Außendurchmesser des Innenprofils
- d2: Innendurchmesser des Innenprofils
- f: Winkel der Seitenflächen einer Montageöffnung
- g1: Winkel zwischen angrenzenden Montageöffnungen
- g2: Winkel zwischen angrenzenden Montageöffnungen

### Bezugszeichenliste in Bezug auf Figuren 12 bis 15

- 1: Toilettensitzbefestiger
- 2: Verbinder
- 3: Mutter
- 4: untere Höhlung (unterer Aufnahmeraum)
- 5: obere Höhlung (oberer Aufnahmeraum)
- 6: Stirnwand
- 7: Schlitz
- 8: Schraubenkopf
- 9: Schraube
- 10: Innensechskant
- 11: Parallelnut
- 12: Schnappnase
- 13: Sechskantmutter
- 14: Kunststoffkörper
- 15: Kragen
- 16: Rippe
- 17: Rastelement
- 18: Drehsicherungsnase (Vorsprung)
- 19: Stirnwand
- 20: Öffnung
- 21: Hinterschneidung
- 22: Drehsicherungsnut (Ausnehmung)
- 23: Zwischenwand (Boden)
- 24: Mittelloch
- 25: Gewinde
- 26: Mutterngewinde (Gewinde der Mutter)
- 27: Sitzring
- 28: Deckel
- 29: Scharnierelement
- 20: Öffnung
- 21: Hinterschneidung
- 22: Drehsicherungsnut (Ausnehmung)
- 23: Zwischenwand (Boden)
- 24: Mittelloch
- 25: Gewinde
- 26: Mutterngewinde (Gewinde der Mutter)
- 27: Sitzring
- 28: Deckel
- 29: Scharnierelement

## Patentansprüche

1. Befestigungssystem (1) zum Befestigen eines Toilettensitzes und/oder Toilettendeckels an einer Toilettenschüssel, das einen zylinderförmigen Verbinder (2) und eine Mutter (3) aufweist, wobei der zylinderförmige Verbinder (2) mit der Toilettenschüssel verbindbar ist und einen Aufnahmeraum (5) für die Mutter (3) bildet sowie ferner ein Innenprofil (31) aufweist, das im Bereich einer Einführöffnung (20) für die Mutter (3) in den Aufnahmeraum (5) rippenförmig ausgebildet ist und weist diametral gegenüber angeordnete Einführkanten (35) auf, die jede eine Hinterschneidung (21) für eine Rastfeder (17) der Mutter (3) bildet, wobei die Mutter (3) in den Aufnahmeraum (5) einführbar ist und ein Gewinde (26) aufweist, das mit einem Scharnierelement (29) des Toilettensitzes und/oder Toilettendeckels verbindbar ist, wobei ein Außenprofil (30) der Mutter (3), das mit dem Innenprofil (31) des Verbinders (2) korreliert, mehrere axiale Rippen (16, 16a, 16b), umfassend erste und zweite Rippen, aufweist, die auf dem Umfang der Mutter (3) verteilt angeordnet und mit dem rippenförmigen Innenprofil (31) des Verbinders (2) so ausgerichtet sind, dass die Mutter (3) in axialer Richtung, d.h. entlang der Mittelachse des Verbinders (2) durch die Einführöffnung (20) in den Aufnahmeraum (5) eingeführt werden kann und die Mutter (3) diametral gegenüber angeordnete Rastfedern (17) aufweist, die zusammen wirken mit den Einführkanten (35) und die radial nach innen und radial nach außen bewegbar sind, und wobei wenigstens eine zweite Rippe (16b) als axiale Zugsicherung zur Fixierung der Mutter (3) im Aufnahmeraum (5) in Längsrichtung des Verbinders (2) ausgebildet ist, die bei einer Verdrehung des Außenprofils (30) der Mutter (3) aus eine Montageposition in eine Halteposition das rippenförmige Innenprofil (31) des Verbinders (2) zumindest teilweise hintergreift, und wobei das Außenprofil (30) der Mutter (3) eine oder zwei diametral gegenüber angeordnete erste Rippe(n) (16a) mit einem Vorsprung (18) als Verdrehsicherung zur Fixierung der Mutter (3) im Aufnahmeraum (5) in Umfangsrichtung des Verbinders (2) aufweist, wobei der Vorsprung (18) in axialer Richtung über eine Unterkante (33) der Mutter (3) vorsteht und mit einer oder zwei entsprechenden Ausnehmung(en) (22) im Boden (23) des Aufnahmeraums (5) in Eingriff bringbar ist/sind.

2. Befestigungssystem nach einem der vorhergehenden Ansprüche,
**dadurch gekennzeichnet, dass**
die Breite einer Rippe (16, 16a, 16b) zumindest im maximalen Querschnitt höchstens 2,8 mm beträgt.

3. Befestigungssystem nach einem der vorhergehenden Ansprüche,
**dadurch gekennzeichnet, dass**
die sich in axialer Richtung erstreckenden Seitenflächen (32) einer Rippe (17) einen Winkel von höchstens 16° bilden.

4. Befestigungssystem nach einem der vorhergehenden Ansprüche,
**dadurch gekennzeichnet, dass**
die Rastfeder (17) in der Ruhestellung eine maximale Radiallage einnimmt, wobei der vertikale Abstand zwischen der maximalen Radiallage und einer imaginären Verlängerung der Unterkante (33) der Mutter (3) höchstens 11 mm beträgt.

5. Befestigungssystem nach Anspruch 4
**dadurch gekennzeichnet, dass**
die maximale Radiallage durch ein freies Ende (34) der Rastfeder (17) gebildet ist, das radial nach innen und radial nach außen bewegbar ist.

6. Scharnier für einen Toilettensitz und/oder Toilettendeckel mit einem Befestigungssystem (1) nach einem der Ansprüche 1 bis 5.

7. Toilettensitz und/oder Toilettendeckel mit einem Scharnierelement (29) nach Anspruch 6 und einem Befestigungssystem (1) nach einem der Ansprüche 1 bis 5.

## Claims

1. A fastening system (1) for fastening a toilet seat and/or toilet cover on a toilet bowl, with said fastening system comprising a cylindrical connector (2) and a nut (3), wherein the cylindrical connector (2) can be connected to the toilet bowl, forms a receptacle space (5) for the nut (3) and furthermore has an inner profile (31), which is designed in a rib-shaped manner in the region of an insertion opening (20) for the nut (3) into the receptacle space (5) and has insertion edges (35) that are arranged diametrically opposite of one another and respectively form an undercut (21) for a catch spring (17) of the nut (3), wherein the nut (3) can be inserted into the receptacle space (5) and has a thread (26) that can be connected to a hinge element (29) of the toilet seat and/or toilet cover, wherein an outer profile (30) of the nut (3), which correlates with the inner profile (31) of the connector (2), has multiple axial ribs (16, 16a, 16b) comprising first and second ribs, which are distributed over the circumference of the nut (3) and aligned with the rib-shaped inner profile (31) of the connector (2) in such a way that the nut (3) can be inserted into the receptacle space (5) through the insertion opening (20) in the axial direction, i.e. along the central axis of the connector (2), wherein the nut (3) has catch springs (17) that are arranged diametrically opposite of one another, interact with the insertion edges (35) and can be moved radially inward and radially outward, and wherein at least one second rib (16b) is designed in the form of an axial pull safeguard that serves for fixing the nut (3) in the receptacle space (5) in the longitudinal direction of the connector (2) and at least partially engages behind the rib-shaped inner profile (31) of the connector (2) during a rotation of the outer profile (30) of the nut (3) from an assembly position into a retaining position, and wherein the outer profile (30) of the nut (3) has one or two first rib(s) (16a) that are arranged diametrically opposite of one another and have a projection (18), which serves as an anti-rotation safeguard for fixing the nut (3) in the receptacle space (5) in the circumferential direction of the connector (2), wherein the projection (18) protrudes over a lower edge (33) of the nut (3) in the axial direction and can be engaged with one or two corresponding recess(es) (22) in the base (23) of the receptacle space (5).

2. The fastening system according to claim 1,
**characterized in that**
the width of a rib (16, 16a, 16b) amounts to no more than 2.8 mm at least in the maximal cross section.

3. The fastening system according to one of the preceding claims,
**characterized in that**
the axially extending lateral surfaces (32) of a rib (17) form an angle of no more than 16°.

4. The fastening system according to one of the preceding claims,
**characterized in that**
the catch spring (17) assumes a maximal radial position in the idle state, wherein the vertical distance between the maximal radial position and an imaginary extension of the lower edge (33) of the nut (3) amounts to no more than 11 mm.

5. The fastening system according to claim 4,
**characterized in that**
the maximal radial position is formed by a free end (34) of the catch spring (17), which can be moved radially inward and radially outward.

6. A hinge for a toilet seat and/or toilet cover with a fastening system (1) according to one of claims 1 to 5.

7. A toilet seat and/or toilet cover with a hinge element (29) according to claim 6 and a fastening system (1) according to one of claims 1 to 5.

## Revendications

1. Système de fixation (1) destiné à la fixation d'un siège de toilettes et/ou d'un couvercle de toilettes sur une cuvette de toilettes, qui comporte un raccord cylindrique (2) et un écrou (3), sachant que le raccord cylindrique (2) peut être raccordé à la cuvette de toilettes et forme un espace de logement (5) pour l'écrou (3) et comporte en plus un profil intérieur (31), qui est constitué en forme de nervure dans la zone d'une ouverture d'introduction (20) pour l'écrou (3) dans l'espace de logement (5) et comporte des bords d'introduction (35) disposés diamétralement opposés, chacun formant une dépouille (21) pour un ressort d'enclenchement (17) de l'écrou (3), sachant que l'écrou (3) peut être introduit dans l'espace de logement (5) et comporte un filetage (26), qui peut être raccordé à un élément de charnière (29) du siège de toilettes et/ou du couvercle de toilettes, sachant qu'un profil extérieur (30) de l'écrou (3), qui est en corrélation avec le profil intérieur (31) du raccord (2) comporte plusieurs nervures axiales (16, 16a, 16b), comprenant des premières et deuxièmes nervures, qui sont disposées réparties à la périphérie de l'écrou (3) et qui sont orientées avec le profil intérieur en forme de nervure (31) du raccord (2) de telle sorte que l'écrou (3) peut être introduit en direction axiale, c.à d. le long de l'axe médian du raccord (2) à travers l'ouverture d'introduction (20) dans l'espace de logement (5) et l'écrou (3) comporte des ressorts d'enclenchement (17) disposés diamétralement opposés, qui coopèrent avec les bords d'introduction (35) et qui peuvent être déplacés radialement vers l'intérieur et radialement vers l'extérieur et sachant qu'au moins une deuxième nervure (16b) est constituée en tant que sécurisation de traction pour la fixation de l'écrou (3) dans l'espace de logement (5) en direction longitudinale du raccord (2), qui lors d'une rotation du profil extérieur (30) de l'écrou (3) d'une position de montage en une position de maintien saisit par l'arrière au moins en partie le profil intérieur en forme de nervure (31) du raccord (2) et sachant que le profil extérieur (30) de l'écrou (3) comporte une ou deux premières nervures (16a) disposées diamétralement opposées avec une saillie (18) en tant que sécurité anti-rotation pour la fixation de l'écrou (3) dans l'espace de logement (5) en direction périphérique du raccord (2), sachant que la saillie (18) ressort en direction axiale sur un bord inférieur (33) de l'écrou (3) et peut être mise en prise avec un ou deux évidements correspondants (22) dans le fond (23) de l'espace de logement (5).

2. Système de fixation selon la revendication 1, **caractérisé en ce que** la largeur d'une nervure (16, 16a, 16b) est au maximum de 2,8mm au moins dans la section maximale.

3. Système de fixation selon l'une quelconque des revendications précédentes, **caractérisé en ce que** les surfaces latérales (32) s'étendant en direction axiale d'une nervure (17) forment un angle maximum de 16°.

4. Système de fixation selon l'une quelconque des revendications précédentes, **caractérisé en ce que** le ressort d'enclenchement (17) adopte une position radiale maximale dans la position de repos, sachant que la distance verticale entre la position radiale maximale et une prolongation imaginaire du bord inférieur (33) de l'écrou (3) est au maximum de 11 mm.

5. Système de fixation selon la revendication 4, **caractérisé en ce que** la position radiale maximale est formée par une extrémité libre (34) du ressort d'enclenchement (17) qui peut être déplacée radialement vers l'intérieur et radialement vers l'extérieur.

6. Charnière pour un siège de toilettes et/ou couvercle de toilettes avec un système de fixation (1) selon l'une quelconque des revendications 1 à 5.

7. Siège de toilettes et/ou couvercle de toilettes avec un élément à charnière (29) selon la revendication 6 et un système de fixation (1) selon l'une quelconque des revendications 1 à 5.
